# FASCICULE DE BREVET EUROPEEN

(11) **EP 1 869 524 B1**
(45) Date de publication et mention de la délivrance du brevet: **06.07.2016**
(21) Numéro de dépôt: 06743701.2
(22) Date de dépôt: 14.04.2006
(51) Int. Cl.: G02F 1/365

(54) **DISPOSITIF DE GENERATION D'UNE LUMIERE POLYCHROMATIQUE A SPECTRE CONTINU PAR EXCITATION A UNE LONGUEUR D'ONDE**
EINRICHTUNG ZUR ERZEUGUNG EINES POLYCHROMATISCHEN LICHTS ÜBER EIN KONTINUIERLICHES SPEKTRUM DURCH ERREGUNG BEI MINDESTENS EINER WELLENLÄNGE
DEVICE FOR PRODUCTION OF A POLYCHROMATIC LIGHT OVER A CONTINUOUS SPECTRUM BY EXCITATION AT ONE WAVELENGTH

(30) Priorité: 15.04.2005 FR 0503807
(43) Date de publication de la demande: 26.12.2007
(73) Titulaire: Centre National de la Recherche Scientifique, 75794 Paris Cedex 16 (FR); Université de Limoges, 87000 Limoges (FR)
(72) Inventeur: COUDERC, Vincent, F-87430 Verneuil sur Vienne (FR); LEPROUX, Philippe, F-87250 Saint Pardoux (FR); TOMBELAINE, Vincent, F- 87000 Limoges (FR); CHAMPERT, Pierre-Alain, F-22450 Langoat (FR); FEVRIER, Sébastien, F-87000 Limoges (FR); BARTHELEMY, Alain, F-87000 Limoges (FR); AUGUSTE, Jean-Louis, F-87000 Limoges (FR); BLONDY, Jean-Marc, F-87000 Limoges (FR)
(74) Mandataire: Osha Liang
(86) Numéro de dépôt international: PCT/FR2006/000830
(87) Numéro de publication internationale: WO 2006/108966

(56) Documents cités:
- SCHREIBER T ET AL: "High average power supercontinuum generation in photonic crystal fibers" OPTICS COMMUNICATIONS, NORTH-HOLLAND PUBLISHING CO. AMSTERDAM, NL, vol. 228, no. 1-3, 1 décembre 2003 (2003-12-01), pages 71-78, XP004472893 ISSN: 0030-4018
- CHAMPERT P-A ET AL: "WHITE-LIGHT SUPERCONTINUUM GENERATION IN NORMALLY DISPERSIVE OPTICAL FIBER USING ORIGINAL MULTI-WAVELENGTH PUMPING SYSTEM" OPTICS EXPRESS, OPTICAL SOCIETY OF AMERICA, WASHINGTON, DC,, US, vol. 12, no. 19, 20 septembre 2004 (2004-09-20), pages 4366-4371, XP002327132 ISSN: 1094-4087

## Description

La présente invention se rapporte à un dispositif de génération de lumière polychromatique.

La présente invention se rapporte plus particulièrement à la génération d'une lumière blanche à large spectre.

L'art antérieur connaît déjà dans ce domaine l'utilisation d'une source émettant directement une lumière blanche à large spectre, telle qu'une lampe à incandescence ou une lampe à quartz. L'utilisation directe de ces sources possède de nombreux inconvénients, comme par exemple l'encombrement, l'émission isotrope, ou la faible luminance.

Afin d'obtenir une lumière blanche large bande, on a tenté d'associer en parallèle un grand nombre de diodes laser monofréquence, mais on comprend bien que dans ce cas, le spectre n'est pas continu. Des variations d'intensité peuvent par ailleurs survenir entre les diodes.

Un autre moyen connu pour l'obtention d'une telle lumière consiste à pomper une fibre optique microstructurée avec un laser monofréquence, opérant en régime pulsé avec des impulsions de l'ordre de la nanoseconde, de la picoseconde, ou de la femtoseconde pour des fréquences de répartition allant du kiloHertz au mégaHertz. On sait qu'un tel pompage induit dans la fibre microstructurée des effets non linéaires qui permettent la génération de photons à différentes longueurs d'onde. Ce type de source a été décrit dans la publication de J.K Ranka et al, Optics Letters, vol. 25, N°1, p. 25-27, 2000, et dans le document de J.C. Knight et al, Optics Letters, vol 26. N°17, page 1356-1358, 2001. Les inconvénients d'une telle source sont l'encombrement et le coût, qui empêchent son utilisation dans un produit intégré.

On connait aussi dans ce domaine la publication de T. Schreiber et al, Optics Communications, 228, p. 71-78, 2003.

Les inventeurs ont par ailleurs proposé FR2867574 une première solution pour l'obtention d'une source blanche à large spectre. Dans ce document, les inventeurs y décrivent, comme illustré figure 1, un dispositif comprenant un module de pompage optique MP, chargé de délivrer un rayonnement présentant au moins deux longueurs d'onde d'excitation différentes λ1 et λ2. Il comprend également des moyens de guidage de lumière GL qui, lorsqu'ils sont excités par un rayonnement comportant plusieurs longueurs d'onde délivré par le module de pompage MP, dans un régime d'interaction lumière-matière non linéaire, délivrent sur leur sortie SGL, une lumière polychromatique correspondant à un continuum.

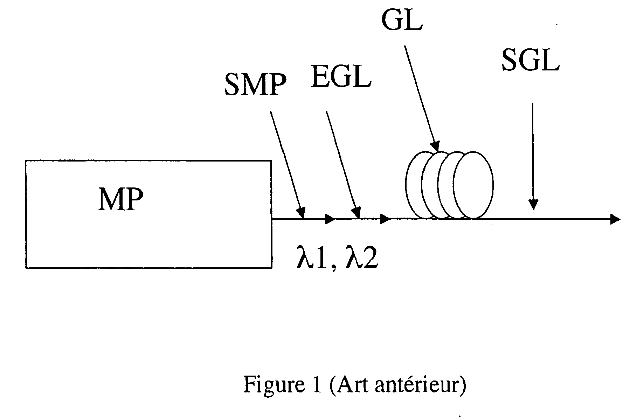

En effet, comme il est expliqué dans la publication française FR2867574, dans une fibre monomode utilisant un régime de dispersion négatif, le pompage par une source monofréquence donne lieu à la génération de raies Raman discrètes vers les longueurs d'onde élevées. Au contraire, dans le cas d'un pompage avec au moins de deux longueurs d'onde, judicieusement choisies, les inventeurs ont montré qu'il apparaissait un élargissement spectral homogène et symétrique de part et d'autre de l'une des longueurs d'onde de pompe, ainsi qu'une minimisation des composantes Raman. Cette modification est principalement due à un phénomène de compétition entre les effets non linéaires. L'élargissement spectral s'explique par la combinaison de l'automodulation de phase, de la modulation de phase croisée et des effets paramétriques (mélange à quatre ondes). L'adjonction d'une seconde puissance de pompe permet alors d'initier des accords de phase entre les longueurs d'onde centrées autour de λ1 et λ2 et la mise en place des effets paramétriques qui ont un seuil d'apparition inférieur à celui de l'effet Raman. Illustré figure 1, un tel dispositif comprend donc un moyen de pompage MP générant deux longueurs d'onde λ1 et λ2 en sortie SMP. Ce rayonnement entre alors dans le moyen de guidage GL par l'entrée EGL, et une lumière blanche à large spectre est émise en sortie du guide GL par la sortie SGL.

Bien que l'invention décrite dans la publication FR2867574 résolve déjà de nombreux problèmes dans le domaine de l'obtention d'une source blanche, elle nécessite un double pompage qui nécessite soit une double pompe, soit un doubleur de fréquence, qui peuvent poser problème.

La présente invention entend donc simplifier encore le dispositif précédemment décrit, tout en gardant des résultats sur la lumière émise très satisfaisants et permettre l'obtention d'un spectre sans discontinuité.

Pour ce faire, la présente invention est du type décrit ci-dessus et elle est remarquable, dans son acception la plus large, en ce qu'elle concerne un dispositif de génération d'un lumière polychromatique, comprenant des moyens de pompage optique, et des moyens de guidage de la lumière, les moyens de pompage optique étant aptes à délivrer un premier rayonnement d'une première longueur d'onde, comprenant un moyen d'injection sélective pour injecter ledit rayonnement dans les moyens de guidage, lesdits moyens de guidage étant agencés pour générer une seconde harmonique correspondant à ladite injection sélective et à délivrer sur une sortie une lumière polychromatique, caractérisé en ce que lesdits moyens de guidage sont sensiblement de type monomode pour ladite première longueur et sensiblement de type multimode pour ladite seconde harmonique, de manière à délivrer sur la sortie la lumière polychromatique par excitation non linéaire issue dudit premier rayonnement et de ladite seconde harmonique.

De préférence, les moyens de guidage comprennent un guide de lumière, par exemple de type fibre optique.

De préférence, afin d'augmenter le taux de génération de ladite harmonique, les moyens de guidage, ou plus précisément une fibre, sont dopés au germanium et/ou traités par poling.

Avantageusement, afin de contrôler la propagation des rayonnements et leurs propriétés spectrales, les moyens de guidage comprennent une fibre microstructurée.

On comprendra mieux l'invention à l'aide de la description, faite ci-après à titre purement explicatif, d'un mode de réalisation de l'invention, en référence aux figures annexées où :
- la figure 1 illustre un dispositif tel que décrit dans la demande antérieure française 04 02589, non encore publiée ;
- la figure 2 illustre un dispositif selon la présente invention ;
- la figure 3 représente une vue en coupe d'une fibre utilisée selon l'invention ;
- la figure 4 illustre un exemple de supercontinuum réalisé en utilisant le dispositif selon l'invention.

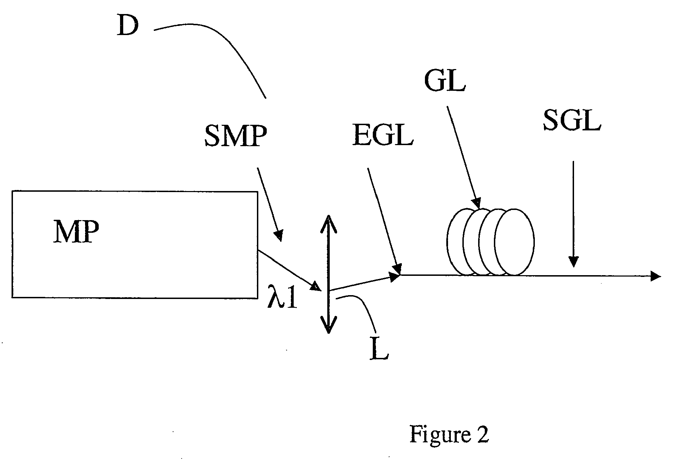

En référence à la figure 2, l'invention comprend un dispositif D dédié à la génération d'une onde polychromatique.

Ce dispositif D comprend tout d'abord un module de pompage optique MP chargé de délivrer un rayonnement. De manière tout à fait originale, il suffit selon l'invention, que ce moyen de pompage délivre un rayonnement présentant une seule longueur d'onde λ1. Il est entendu que ce moyen peut délivrer plus d'une longueur d'onde, mais le problème technique de l'émission d'une lumière blanche est résolu selon l'invention avec seulement une longueur d'onde.

Ce moyen de pompage peut par exemple se présenter sous la forme d'une source laser monochromatique SL. I1 est entendu que tout moyen de pompage apte à délivrer un rayonnement d'au moins une longueur d'onde peut être utilisé.

À titre d'exemple et afin de décrire au mieux l'invention, on considère par exemple une émission d'un rayonnement à 1064 nm en sortie SMP du moyen de pompage MP. Par ailleurs, le module de pompage utilisé peut fonctionner soit selon un mode impulsionnel, soit selon un mode continu ou quasi continu.

Le dispositif D selon l'invention comprend également des moyens de guidage de lumière GL chargés de délivrer sur leur sortie SGL une lumière polychromatique correspondant à un continuum.

On entend ici par lumière polychromatique, une lumière dont le spectre est sensiblement continu et non discrétisé en longueur d'onde sur une large bande.

De préférence, le moyen de guidage GL utilisé est une fibre optique, ou de façon plus générale un guide de lumière, dont les propriétés non linéaires sont fonction de sa structure et de ses dimensions. Par exemple, on utilise une fibre dite microstructurée. Ce type de fibre optique présente une structure opto-géométrique, modifiable lors de sa création qui permet un contrôle du profil de dispersion et autorise un guidage de la lumière sur toute la bande de transmission du matériau de la fibre.

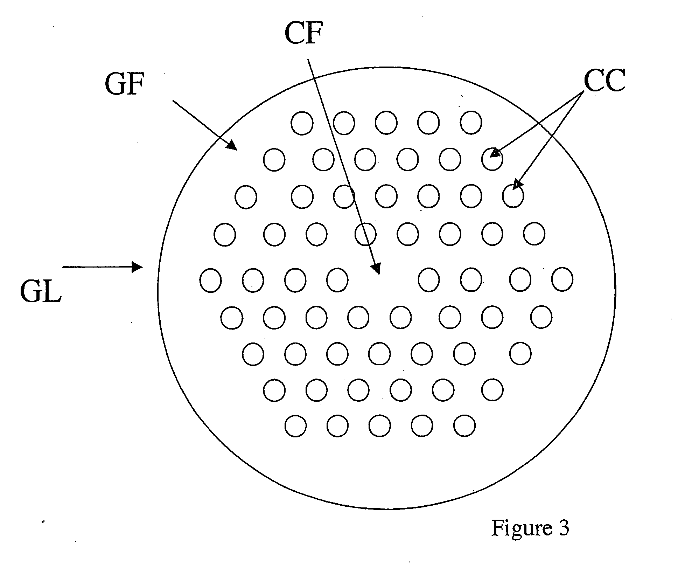

Par exemple, la fibre optique GL peut être une fibre optique à trous du type de celle illustrée figure 3 dans une vue en coupe transversale. Ce type de fibre optique est notamment décrit en détail dans le brevet EP 1 148 360. Cette fibre microstructurée est constituée de canaux creux CC parallèles à l'axe longitudinal de la fibre optique GL, placés les uns à côté des autres autour du coeur CF de la fibre, selon un pas choisi, de manière à définir une structure à maille (pouvant être appelé cristal photonique), et formé dans le matériau constituant la gaine GF qui entoure le coeur CF de la fibre optique GL. Il est rappelé qu'un cristal photonique peut être une structure à bande photonique interdite (lorsque le guidage est assuré par le maillage transverse), constitué d'éléments diffractants (ici des canaux creux CC) définissant une maille et dont les propriétés physiques permettent de contrôler la propagation de la lumière. Ces fibres peuvent par exemple être obtenues par étirement dans une filière, comme décrit dans l'ouvrage de Jean-Michel Lourtioz, "Les cristaux photoniques", p. 324, Editions Hermes, 2003.

Selon un autre mode de réalisation, on peut utiliser une fibre non microstructurée. Néanmoins, pour obtenir les longueurs d'onde dans la région du visible, celle-ci doit avoir un zéro de dispersion décalé vers les basses longueurs d'onde.

Afin d'obtenir l'ensemble des longueurs d'onde désirées, en particulier l'infrarouge et le visible, la fibre choisie est soit complètement unimodale soit unimodale pour la longueur d'onde de pompe, et multimodale et en particulier bimodale pour la région correspondant aux harmoniques d'ordre élevé, par exemple dans le visible.

L'homme du métier comprend l'importance du choix de la fibre en ce qui concerne ses modes d'excitation. En effet, pour une fibre unimodale, les accords de phase inter-modaux sont impossibles et repoussent le seuil d'apparition des effets non linéaires (un taux de génération de second harmonique supérieur à 3%-4% est alors nécessaire). L'utilisation d'une fibre bi-modes dans la région du visible et unimodale dans la région de l'excitation (infrarouge) permet un abaissement du seuil d'apparition des effets non linéaires (effets paramétriques) grâce à une évolution de la courbe de dispersion entre les différents modes.

Au contraire, dans une fibre très multimodale, la répartition de la puissance incidente sur plusieurs modes diminue l'efficacité du transfert de puissance vers les basses longueurs d'onde. On comprend alors qu'il est impossible d'exciter un mode unique dans la région du visible si la fibre est très multimodale pour la longueur d'onde de pompe.

Selon l'invention, le signal délivré par la source excitatrice MP est injecté dans le moyen de guidage de lumière GL, par exemple sous la forme d'une fibre optique microstructurée. Une excitation particulière dite "injection sélective" permet d'obtenir l'excitation d'un mode transverse d'ordre supérieur unique (par exemple le mode dit "LP11") autre que le mode fondamental (dit "LP01") dans la région du visible.

Cette injection sélective est par exemple réalisée à l'aide d'une lentille convergente L comme illustré figure 2. Le déplacement transverse de la lentille et une orientation particulière du faisceau injecté dans la fibre permet ainsi d'exciter un mode transverse fondamental (TEM00) ou d'ordre élevé unique (LP11 ou LP21).

Par ailleurs, la fibre microstructurée est réalisée de manière à présenter un fort taux de génération de second harmonique par exemple grâce aux interfaces air-silice et aux impuretés emprisonnées dans la silice. Une procédure de "poling" (terme anglais signifiant perchage dans le domaine du traitement des métaux) optique, électrique ou thermique de cette fibre permet d'augmenter de manière significative le taux de génération de second harmonique. Cet effet non linéaire de doublage de fréquence est directement utilisé pour engendrer le supercontinuum.

Plus particulièrement, la première expérience de génération de second harmonique a été observée par Sasaki Y. et al (Appl. Phys. Lett., 39 n°6 (1981) pp466-468) dans une fibre de silice dont le coeur est dopé au germanium. La polarisation est induite par l'illumination par un laser Nd : YAG (1,064µm ; puissance crête 0,8kW) pendant plusieurs heures. Le rapport de conversion est de l'ordre de 1%.

Quelques années plus tard, l'expérience a été reprise par Österberg et Margulis (Opt. Lett., 11 n°8 (1986) pp516-51) sur des fibres de silice dopées au germanium et irradiées par un laser Nd : YAG (1,064*µ*m ; puissance crête 0,5-1kW ; =50ps). Le rapport de conversion est bien supérieur et de l'ordre de 5%.

En résumé, des modèles ont montrés que cette génération de seconde harmonique spontanée dans les fibres est basée sur des défauts et des impuretés entraînants des biréfringences locales. La génération de second harmonique est alors créée en régime de fort désaccord de phase et de manière incohérente d'un endroit à l'autre.

De préférence, selon l'invention, on augmente cet effet spontané par un effet de poling optique, thermique ou électrique permettant d'induire un champ local fort dans la fibre. Ce moyen permet d'améliorer encore les résultats grâce à une meilleure génération de seconde harmonique.

Selon une autre variante pouvant être combinée avec le poling précédent, on utilise des fibres à trous dans lesquelles les interfaces entre la silice et la gaine peuvent être une source spontanée de génération de second harmonique.

Il sera bien compris par l'homme du métier que les performances de la présente invention augmentent avec le taux de génération de seconde harmonique. Plus ce taux est élevé, plus le spectre dans la région du visible sera brillant pour un accord de phase donné. Des forts taux de génération compris par exemple entre 2% et 10% peuvent par exemple être obtenu par un dopage de la fibre avec du germanium et/ou par un poling.

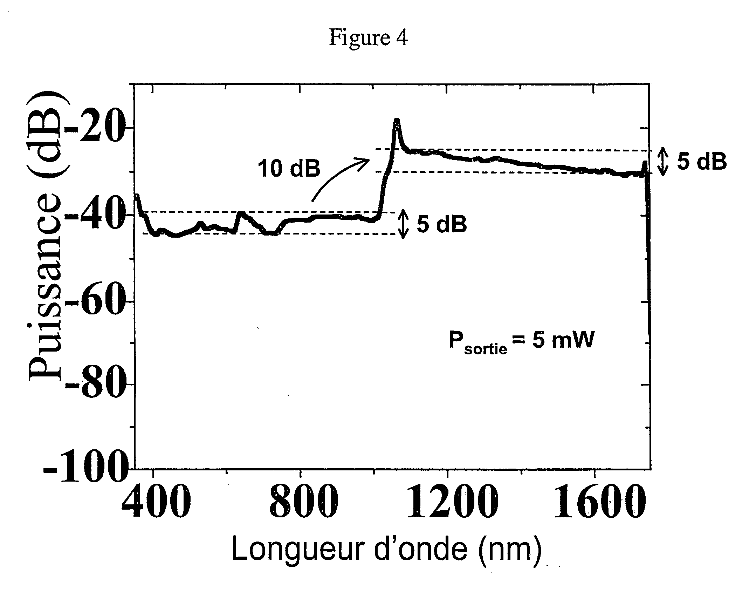

Illustré figure 4, l'homme du métier notera que de façon remarquable, le supercontinuum obtenu en utilisant le dispositif selon l'invention possède l'ensemble des composantes fréquentielles du domaine visible ainsi que dans le proche infrarouge, et ce, de façon très uniforme en puissance.

Avec le dispositif selon l'invention, ce spectre large continu peut être généré sur des longueurs d'onde allant de 300 nm à 1,8 µm pour des niveaux de puissance sensiblement uniforme.

La source laser est par exemple de type YAG et peut être unimodale ou multimodale, nanoseconde, picoseconde, microseconde ou continue. La fibre utilisée pour réaliser le spectre de la figure 4 mesure environ 4 mètres.

L'homme du métier comprendra que les types d'application de la présente invention sont très divers. On citera à titre d'exemple le domaine des télécommunications, la biophotonique, en particulier pour le diagnostique ou le tri cellulaire, l'ophtalmologie ou la tomographie optique cohérente, ou bien la microscopie confocale.

L'invention est décrite dans ce qui précède à titre d'exemple. Il est entendu que l'homme du métier est à même de réaliser différentes variantes de l'invention sans pour autant sortir du cadre du brevet.

## Revendications

1. Dispositif de génération d'une lumière polychromatique, comprenant des moyens de pompage optique, et des moyens de guidage de la lumière, les moyens de pompage optique étant aptes à délivrer un premier rayonnement d'une première longueur d'onde, comprenant un moyen d'injection sélective pour injecter ledit rayonnement dans les moyens de guidage, lesdits moyens de guidage étant agencés pour générer une seconde harmonique correspondant à ladite injection sélective et pour délivrer sur une sortie une lumière polychromatique, **caractérisé en ce que** lesdits moyens de guidage sont sensiblement de type monomode pour ladite première longueur et sensiblement de type multimode pour ladite seconde harmonique, de manière à délivrer sur la sortie la lumière polychromatique par excitation non linéaire issue dudit premier rayonnement et de ladite seconde harmonique.

2. Dispositif selon la revendication 1, **caractérisé en ce que** lesdits moyens de guidage comprennent une fibre optique.

3. Dispositif selon la revendication 2, **caractérisé en ce que** ladite fibre optique est une fibre microstructurée.

## Patentansprüche

1. Vorrichtung zur Erzeugung eines polychromatischen Lichts, die Mittel zum optischen Pumpen und Mittel zum Leiten des Lichts umfasst, wobei die Mittel zum optischen Pumpen dazu eingerichtet sind, eine erste Strahlung mit einer ersten Wellenlänge abzugeben, und ein Mittel zur selektiven Einspeisung zum Einspeisen der besagten Strahlung in die Leitmittel umfasst, wobei die besagten Leitmittel zum Erzeugen einer zweiten Harmonischen, die der besagten selektiven Einspeisung entspricht, und zum Abgeben eines polychromatischen Lichts an einem Ausgang eingerichtet sind, **dadurch gekennzeichnet, dass** die besagten Leitmittel im Wesentlichen vom Monomodetyp für die besagte erste Länge und im Wesentlich vom Monomodetyp für die besagte zweite Harmonische ist, um das polychromatische Licht an dem Ausgang durch nichtlineare Anregung ausgehend von der besagten ersten Strahlung und der besagten zweiten Harmonischen abzugeben.

2. Vorrichtung nach Anspruch 1, **dadurch gekennzeichnet, dass** die besagten Leitmittel eine optische Faser umfassen.

3. Vorrichtung nach Anspruch 2, **dadurch gekennzeichnet, dass** die besagte optische Faser eine mikrostrukturierte Faser ist.

## Claims

1. A device for producing a polychromatic light, comprising optical pumping means, and means for guiding the light, the optical pumping means being able to deliver a first radiation at a first wavelength, comprising a selective injection means to inject said radiation into the guiding means, said guiding means being arranged to generate a second harmonic corresponding to said selective injection and to provide a polychromatic light at an outlet, **characterized in that** said guiding means are substantially of the mono-modal type for said first wavelength and substantially of the multi-modal type for said second harmonic, so as to provide the polychromatic light at the outlet by nonlinear excitation of said first radiation and said second harmonic.

2. The device according to claim 1, **characterized in that** said guiding means comprise an optical fiber.

3. The device according to claim 2, **characterized in that** said optical fiber is a micro-structured fiber.
